(19) **Europäisches Patentamt / European Patent Office / Office européen des brevets**

(11) **EP 2 290 649 B1**

(12) **EUROPEAN PATENT SPECIFICATION**

(45) Date of publication and mention
of the grant of the patent:
**18.12.2013 Bulletin 2013/51**

(51) Int Cl.:
**G11B 7/252** (2006.01)    **C08F 290/06** (2006.01)
**G11B 7/254** (2013.01)    **G11B 7/257** (2013.01)

(21) Application number: **09738861.5**

(86) International application number:
**PCT/JP2009/058479**

(22) Date of filing: **30.04.2009**

(87) International publication number:
**WO 2009/133924 (05.11.2009 Gazette 2009/45)**

(54) **OPTICAL RECORDING MEDIUM AND COMPOSITION OF REACTIVE CROSSLINKABLE RESIN FOR USE IN PRODUCING THE SAME**

OPTISCHES AUFZEICHNUNGSMEDIUM UND ZUSAMMENSETZUNG EINES REAKTIVEN VERNETZBAREN HARZES ZUR VERWENDUNG BEI SEINER HERSTELLUNG

SUPPORT D'ENREGISTREMENT OPTIQUE ET COMPOSITION DE RÉSINE RÉACTIVE RÉTICULABLE UTILISÉE POUR SA PRODUCTION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **01.05.2008   JP 2008119681**

(43) Date of publication of application:
**02.03.2011   Bulletin 2011/09**

(73) Proprietors:
• **Sony Corporation**
  **Tokyo 108-0075 (JP)**
• **Sony Chemical & Information Device Corporation**
  **Tokyo 141-0032 (JP)**

(72) Inventors:
• **OKAWA Naoki**
  **Haibara-gun**
  **Shizuoka 421-0305 (JP)**
• **ISHIKAWA Hiroyuki**
  **Tokyo 141-0032 (JP)**

(74) Representative: **Müller - Hoffmann & Partner Patentanwälte**
**Innere Wiener Strasse 17**
**81667 München (DE)**

(56) References cited:
**JP-A- 2003 113 296      JP-A- 2003 123 316**
**JP-A- 2005 319 459      JP-A- 2006 004 457**
**JP-A- 2007 250 079      JP-A- 2008 088 382**
**JP-A- 2009 009 638**

EP 2 290 649 B1

## Description

### TECHNICAL FIELD

The present invention relates to an optical recording medium and a liquid active energy line cure reactive bridge resin composition of matter used for the same, for example, relates to an optical disc and a light transmission layer material therefor.

### BACKGROUND ART

Density growth of an optical recording medium has been improved. For example, the Blu-ray Disc (registered trademark) or the like that realizes a significant high capacity compared to, for example, the existing CD (Compact Disc) and the existing DVD (Digital Versatile Disc) has been known.

In the high density optical disc, an information signal section for recording and/or reproducing an information signal is formed on a principal surface of a disc substrate, and a reflection film is formed on this information signal section. On the reflection film, a light transmission layer and a protective layer are formed by, for example, spin coat method.

In reproducing a record, the information signal section is irradiated with laser light through the light transmission layer, and thereby recording or reproduction are performed.

Such a high density optical disc has the light transmission layer formed from an active energy line cure resin only on a single side (information readout face side into which laser light enters). Thus, the high density optical disc has a structure asymmetric in the thickness direction of the disc. Therefore, the high density optical disc has easily warping characteristics compared to the DVD or the like.

### PRIOR ART DOCUMENTS

### PATENT DOCUMENTS

Patent Citation 1: Japanese Unexamined Patent Application Publication No. 2004-127345
Patent Citation 2: Japanese Unexamined Patent Application Publication No. 2006-164496
Patent citation 3: Japanese Unexamined Patent Application No. 2006-004457

### SUMMARY OF INVENTION

To inhibit disc warp, it is effective that the elasticity modulus at 25 deg C of the light transmission layer formed from the active energy line cure resin is decreased down to about from $1*10^8$ Pa to $5*10^8$ Pa both inclusive, and the volume expansion/shrinkage portion of the light transmission layer associated with an internal stress generated in curing and temperature and humidity change is relaxed inside the light transmission layer.

However, in the case where design is made so that the stress is absorbed inside the light transmission layer, if static load is continuously applied to the light transmission layer for a long time, in some cases, planarity of the light transmission layer is irreversibly impaired, and thereby recording and reproduction become significantly difficult. It is considered that such a case results from a fact that creep is generated in the light transmission layer by being applied with the static load for a long time.

For example, in the case of the Blu-ray Disc, when the disc is not used, the disc is contained and stored in a plastic case, and the disc surface is prevented from being applied with load. For example, in the plastic case, the disc is held at the center hole section of the disc, and the disc surface is not pressed onto the case. Thus, as long as the disc is used appropriately, the foregoing problem that continuous static load results in the creep in the light transmission layer is not generated.

However, in view of practical usage environments on a user side, it is appropriate to take account of the following states though these are extreme states:

(1) In the case that a user inserts a Blu-ray Disc in a disc case or the like made of an unwoven cloth or paper that may be currently adopted for a CD, and the user stores the case in a shelf or the like in a state that the case is strongly pressed from both face sides.
(2) In the case that a disc is left on a carpet or the like, and a thing such as a book having a certain degree of weight is placed on the disc.
(3) In the case that a plurality of discs are piled and left.
(4) In the case that a disk is left in a state that a thing having a certain degree of weight is placed on part of the recording face side (information readout face side) of the disc.

For example, the foregoing states (1) to (4) are states not originally foreseen as appropriate usage. However, if the disc is left in such a state for a long time, planarity of the light transmission layer is impaired, and recording and reproduction are disturbed.

An experiment has clarified that, even if the disc is left in the foregoing extreme states, in order to resolve the foregoing problem of creep, it is significant to increase elasticity modulus at 25 deg C of the light transmission layer to $2*10^9$ Pa or more. However, in this case, there is a possibility as follows. That is, being associated with tension of the substrate due to volume shrinkage when a light transmission layer material is spin-coated and cured with active energy line or temperature and humidity change, disc component materials have each different stretching ratio, the substrate and the light transmission layer act as if they structure a bimetal, possibly resulting in generating warp of the disc.

As described above, it has been difficult in the high density optical disc to realize both decreasing the warp of the disc and decreasing the creep.

Thus, in the present invention, it is an object to resolve the foregoing two problems.

An optical recording medium according to the present invention is formed from a laminar structure having: a substrate section; one or a plurality of information signal sections for recording or reproducing an information signal being located on an information readout face side viewed from the substrate section; a reflection film formed on the information signal section; and a light transmission layer formed closer to the information readout face side than the reflection film. In the light transmission layer, an elasticity modulus at 25 deg C is in the range from $1*10^7$ Pa to $5*10^8$ Pa, an elasticity modulus at -20 deg C is in the range from $4*10^8$ Pa to $5*10^9$ Pa, and a glass transition point temperature is from -20 deg C to 0 deg C both inclusive.

A liquid active energy line cure reactive bridge resin composition of matter according to the present invention contains: an oligomer component in which a viscosity at 25 deg C in the state of liquid before cure reaction is from 300 to 3000 m Pa•s both inclusive, and a glass transition point temperature of a simple cured material is from -50 deg C to 15 deg C both inclusive; and a photopolymerization initiator component. As physical properties after cure reaction, an elasticity modulus at 25 deg C is in a range from $1*10^7$ Pa to $5*10^8$ Pa, an elasticity modulus at -20 deg C is in a range from $4*10^8$ Pa to $5*10^9$ Pa, and a glass transition point temperature is from -20 deg C to 0 deg C both inclusive.

The liquid active energy line cure reactive bridge resin composition of matter according to the present invention further contains a bifunctional (or multifunctional larger than bifunctional) monomer component in which a glass transition point temperature of a simple cured material is from -40 deg C to 90 deg C both inclusive.

As described above, in the light transmission layer of the optical recording medium such as a high density optical disc, decreasing the elasticity modulus is effective with regard to prevention of warp. However, in the case where static load is continuously applied for a long time, creep is generated in the light transmission layer and planarity is irreversibly impaired in some cases. Meanwhile, in the case where the elasticity modulus is increased, creep is not generated but warp is easily generated. Thus, the inventors of the present invention studied the light transmission layer material capable of resolving the foregoing both problems, and found the foregoing physical property values as the light transmission layer material.

In the optical recording medium according to the present invention, the light transmission layer has the elasticity modulus with which warp is hardly generated. In addition, even if static load is continuously applied to the light transmission layer for a long time, planarity of the light transmission layer is prevented from being irreversibly impaired, and durability necessary for the optical recording medium is able to be secured.

Further, the liquid active energy line cure reactive bridge resin composition of matter of the present invention is a material suitable for the light transmission layer of the optical recording medium.

BRIEF DESCRIPTION OF DRAWINGS

[FIG. 1] FIG. 1 is an explanation drawing of a laminar structure of an optical disc according to an embodiment of the present invention;
[FIG. 2] FIG. 2 is an explanation drawing of another laminar structure of the optical disc;
[FIG. 3] FIG. 3 is an explanation drawing illustrating measurement results of indentation creep;
[FIG. 4] FIG. 4 is an explanation drawing of load applied to an indenter in a measurement of a return value of an indentation depth;
[FIG. 5] FIG. 5 is an explanation drawing illustrating measurement results of the return value of the indentation depth;
[FIG. 6] FIG. 6 is an explanation drawing of compositions of examples and comparative examples; and
[FIG. 7] FIG. 7 is an explanation drawing of physical property values and evaluation results of the examples and the comparative examples.

BEST MODE(S) FOR CARRYING OUT THE INVENTION

An embodiment of the present invention will be hereinafter described.

The present invention is suitable as an optical recording medium in which an information signal section is formed on a principal surface of a disc substrate, a light recording layer and/or a light reflection layer is provided on the information signal section, on which a light transmission protective layer is formed by spin coat method, and an information signal is recorded and/or reproduced through the light transmission layer. A description will be given by taking the Blu-ray Disc as an example as the embodiment of the optical recording medium having such a structure.

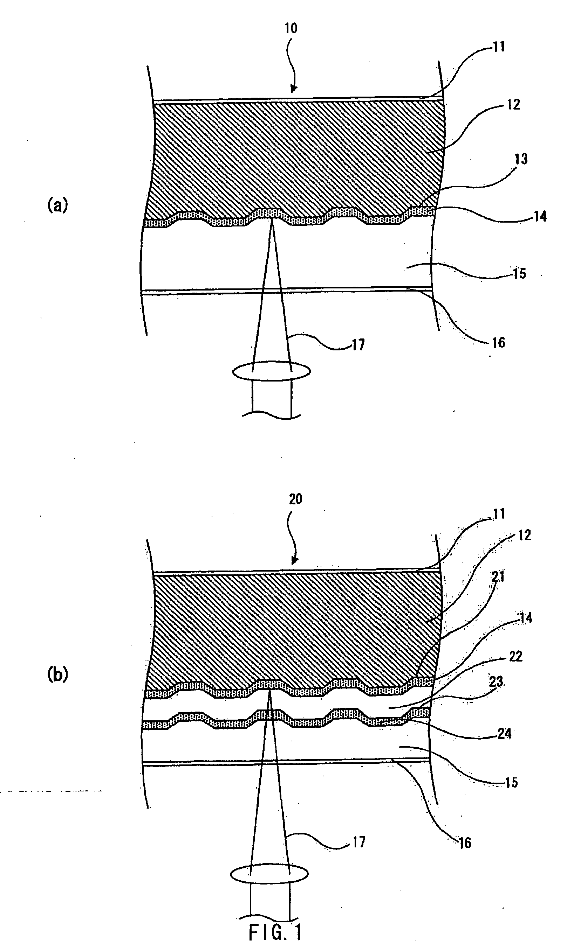

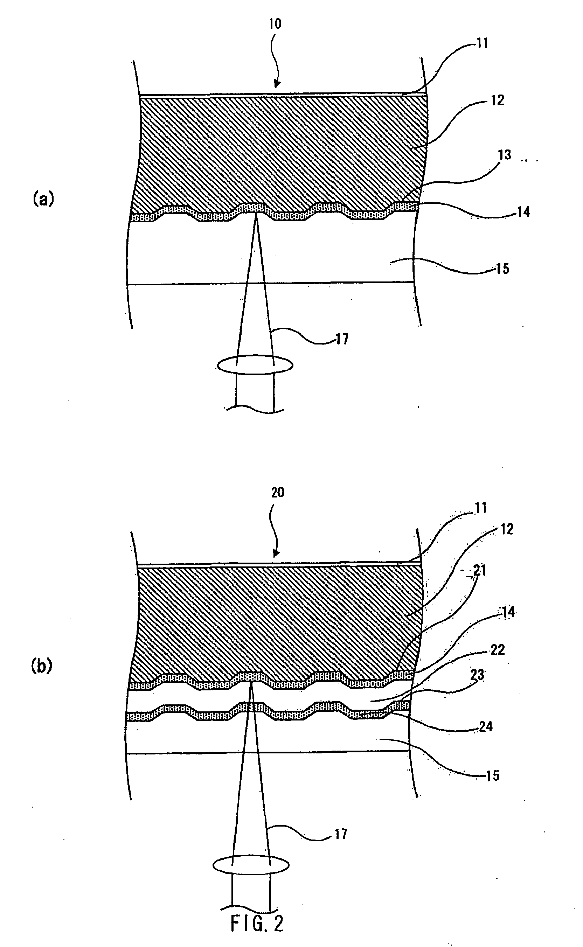

FIG. 1 and FIG 2 illustrate an example of layer structures of the Blu-ray Disc.

FIG. 1(a) illustrates a layer structure of a single layer disc 10 in which a so-called recording layer is composed of a single layer.

The single layer disc 10 has a disc substrate 12 in which an information signal section 13 is formed on a single face thereof. The information signal section 13 is a section in which a concavity and convexity shape as a pit array pattern composed of pits and spaces is formed.

As the disc substrate 12, a substrate in which pits are directly formed on a transparent resin such as polycarbonate, polymethylmethacrylate, and amorphous polyolefin or a glass, a substrate in which the pit array pattern (information signal section 13) is formed on the foregoing resin or a glass by photopolymer method or the like is often used. The disc substrate 12 is formed as a disc having a thickness of about 1.1 mm.

For reproduction, on the face having a recording layer on the disc substrate 12 having the information signal section 13, a reflection film 14 for reflecting laser light is formed. The face on which the reflection film 14 is formed becomes an entrance face of laser light 17.

The reflection film 14 is often made of silver, a silver alloy, aluminum, or an aluminum alloy. However, the material thereof is not limited thereto, since the function is satisfied as long as a material capable of effectively reflecting light with 405 nm as a wavelength of reproduction laser light is used.

On the front face of the reflection film 14 as the laser light entrance face of the disc substrate 12, a light transmission layer 15 (cover layer) having a thickness of 100 microns is formed. The light transmission layer 15 is obtained by curing a coating composition of matter containing a compound having one or more active energy line cure polymerizable functional groups.

Further, on the front face side of the light transmission layer 15, that is, on the signal readout side into which the laser light 17 enters, a hard coat layer 16 as a protective layer is formed.

In this case, a light transmission protective layer is composed of the light transmission layer 15 and the hard coat layer 16. The total thickness of the light transmission layer 15 and the hard coat layer 16 is from 95 to 105 microns both inclusive. The ratio between the light transmission layer 15 and the hard coat layer 16 is not particularly specified. However, in the hard coat layer 16 as an external layer, the number of polymerizable functional groups is large in order to obtain hard coat characteristics, and a residual stress is easily generated due to volume shrinkage at the time of energy line curing. Thus, the thickness of the hard coat layer 16 is desirably the minimum with which the hard coat characteristics are able to be secured. For example, the thickness of the hard coat layer 16 is often set to from 1.5 to 5 microns both inclusive.

For the hard coat layer 16, the elasticity modulus at 25 deg C is from $1*10^8$ to $5*10^9$ both inclusive and the glass transition point temperature is from 60 deg C to 150 deg C both inclusive.

On the side opposite to the laser light entrance side with respect to the disc substrate 12 (so-called a label face), a printing face 11 provided with label printing for displaying contents of the optical disc is formed.

For the Blu-ray Disc, a two layer disc structure having two recording layers (a first and a second information signal sections) is standardized. FIG. 1(b) illustrates a laminar structure of a two layer disc 20.

In this case, on the disc substrate 12 having a first information signal section 21, a reflection film 14 for reflecting laser light is formed for reproducing a first recording layer formed from the first information signal section 21. After that, an intermediate layer 22 having a thickness of from 20 to 30 microns both inclusive is layered.

The intermediate layer 22 is pressed by a stamper on which a pit array pattern is previously formed and thereby an information signal of the second layer is transcribed to form a second information signal section 23.

On the information signal section 23 on which the pit array pattern is transcribed, a translucent reflection film 24 for reflecting laser light is formed. After that, the light transmission layer 15 is formed, and the hard coat layer 16 is formed from a resin cured material having hard coat characteristics. The light transmission layer 15 is obtained by curing the coating composition of matter containing the compound having one or more active energy line cure polymerizable functional groups described above.

In this case, the total thickness of the light transmission layer 15 and the hard coat layer 16 is 75 microns.

Though FIG. 1 illustrates the laminar structure having the hard coat layer 16, the hard coat layer 16 is not necessarily formed. For example, in the case where surface protection function is obtained by the light transmission layer 15, it is possible that the hard coat layer is not provided as in FIGS. 2(a) and 2(b). FIGS. 2(a) and 2 (b) illustrates a structure similar to that of FIGS. 1(a) and 1(b), except that the hard coat layer is not formed. By not providing the hard coat layer, steps of manufacturing the disc are able to be simplified.

As illustrated in FIGS. 1(a), 1(b), 2(a), and 2(b), the Blu-ray Disc has single side readout system, that is, has the light transmission layer 15 only on one principle surface of the disc substrate 12. Thus, the Blu-ray Disc is asymmetric in the thickness direction of the disc, and therefore the disc is easily warped by being affected by each residual stress belonging to each layer.

The Blu-ray Disc has 25GB capacity per information recording layer for recording or reproducing a high quality video corresponding to a HDTV (High Definition Television). To stably record or reproduce such high capacity information, the written standards of the Blu-ray Disc specify the mechanical characteristics of the disc in the assumed temperature and humidity region at which a user uses the disc.

Further, to generalize the Blu-ray Disc as an inexpensive media suitable for large-scale distribution similar to the existing CD and the existing DVD, it is necessary to assume that the Blu-ray Disc is to be handled almost equally to the existing CD and the existing DVD. The laser entrance side (information readout face) of the CD and the DVD is composed of a plastic surface formed by injection molding. Meanwhile, the laser entrance side (information readout face) of the Blu-ray Disc is composed of the light transmission layer 15 formed by coating with the use of spin coat method and curing with active energy line.

The light transmission layer 15 is the cured material of the coating composition of matter containing the compound having one or more active energy line cure polymerizable functional groups. In the light transmission layer 15, the molecular weight of the cured material is not constant but the same is ununiformly distributed compared to in the plastic surface formed by injection molding. Thus, in the light transmission layer 15, a gap is easily generated between each polymerized polymer mass. If a static load is applied to the light transmission layer for a long time, deformation originated from the foregoing gap is generated, and irreversible deformation (for example, creep) is generated in some cases. If the load is removed, part of such deformation is restored but such deformation is not perfectly restored.

In the case where the hard coat layer 16 is provided, the thickness of the hard coat layer 16 is about several microns, and the deformation due to the load is mainly generated as deformation of the light transmission layer 15.

In this embodiment, the light transmission layer 15 with which warp of the disc due to various temperature and humidity change tests specified in the written standards of the Blu-ray Disc is able to fall within the scope of the standards, and creep is not generated is provided. A description will be hereinafter given of contents of the mechanical characteristics of the disc described in the written standards of the Blu-ray Disc.

<Acceleration test of temporal change based on storing disc for a long time>

After a disc is left for 96 hours by a method in which environment of 70 deg C and 50% RH is specified, measurement is made at ambient temperature. The standard value is ±0.7 deg. In the tests for the following respective examples, a result within ±0.3 deg was evaluated as o (=OK), and a result over ±0.3 deg was evaluated as × (=NG) in consideration of manufacturing margin.

<Sudden change test>

First conditions: A disc is stored in environment of 25 deg C and 95% RH. The environment is suddenly changed to environment of 25 deg C and 45% RH, and its temporal change is measured.
The standard value is ±0.8 deg. In the tests for the following respective examples, a  result within ±0.8 deg was evaluated as o, and a result out of ±0.8 deg was evaluated as x.
Second conditions: A disc is stored in environment of 25 deg C and 45% RH. The environment is suddenly changed to environment of 70 deg C and 5.3% RH, and its temporal change is measured.
The standard value is ±0.8 deg. In the tests for the following respective examples, a result within ±0.8 deg was evaluated as o, and a result out of ±0.8 deg was evaluated as ×.
Though not described in the written standards, a description will be hereinafter given of evaluation items and standard values for securing disc quality in the case where a user continuously uses the disc in various usage environments.

<Life test based on storing disc for a long time>

Conditions: After a disc is left for 10 days in environment of 80 deg C and 85% RH, the temperature is returned back to ambient temperature. After the temperature is returned back to ambient temperature, the disc is further left for 2 days.
Evaluation: Electric characteristics of the disc (jitter, asymmetry, error rate and the like) are measured and compared with the initial value. In the case that the all electric characteristics were within the scope of the written standards, it was evaluated as o. In the case that the all electric characteristics were out of the scope of the written standards, it was evaluated as ×.

<Creeping property of light transmission layer>

Conditions: A disc is inserted in an unwoven envelope-shaped case, which is applied with load of 50 g/cm2 for 10 days. Since disc storage environment was standardized as from -10 deg C to 55 deg C both inclusive, evaluation was made under three conditions of -10 deg C, 25 deg C, and 55 deg C.
Evaluation: Electric characteristics of the disc (focusing attention on error rate) were measured and compared with the initial value. In the case that a result was within 10 times as large as the initial value, it was evaluated as ○. In the case that a result was larger than 10 times as large as the initial value, it was evaluated as ×.

<Warp based on leaving disc under low temperature environment>

Conditions: A disc is left for 3 hours or more in environment of 5 deg C and 45%RH. Under such environment, warp of the disc is measured.
Evaluation: A result within ±0.7 deg was evaluated as ○, and a result out of ±0.7 deg was evaluated as ×.

<Hardness of surface>

Conditions: Taper abrasion test is used. Ablation ring: CS-10F; the number of times: 5; and load: 250 g.
Evaluation: In the case where jitter was under 10%, it was evaluated as ○, and in the case where jitter is 10% or more, it was evaluated as ×.

<Workability>

Evaluation was made on whether or not repetition precision in dropping a liquid active energy line cure reactive bridge resin composition of matter onto an information recording medium, easiness of securing a uniform coating thickness in spin coat, easiness of vacuum defoaming performed for the purpose of removing air bubbles mixed in the reactive bridge resin composition of matter, repetition usage suitability of spin-out reactive bridge resin composition of matter and the like were on the level with which the productivity was able to be secured/retained in manufacturing the optical disc with the use of a production equipment.

Conditions: Trial production of information recording mediums by the production equipment.

Evaluation: In the case where the non defective product ratio was 80% or more, it was evaluated as ○, and in the case where the non defective product ratio was less than 80%, it was evaluated as ×.

<Martens hardness and indentation creep>

Physical property values obtained by the measurement method specified in "ISO14577-1, Metallic materials-Instrumented indentation test for hardness and materials parameters Part 1: Test method." Martens hardness (HM) is calculated as follows. Load is applied to a Vickers square pyramid diamond indenter (or a trigonal pyramid indenter). The indentation depth of the indenter at this time is measured. The Martens hardness (HM) is calculated by the relevant load and the indentation surface area obtained by the relevant indentation depth.

Examples of test machines with which measurement is enabled based on the foregoing principle include H100C, Fischer Instruments K.K. make; and DUH-211, Shimazu Corporation.

When dent depth change is measured under a constant test load, relative change of the dent depth is able to be calculated. Indentation creep ($C_{IT}$) is a value expressed by the following formula:

$$C_{IT}=(h2-h1)/h1*100$$

where h1 represents a dent depth (mm) when the test load reaches the set test load, and h2 represents a dent depth (mm) when the set test load is retained.

Conditions: Martens hardness (HM): 0.01/10.0/10.0 (indentation for 10.0 sec under test force of 10.000 mN, and test force retained for 10.0 seconds) Conditions: indentation creep ($C_{IT}$): 0.01/10.0/10.0 (indentation for 10.0 sec under test force of 10.000 mN, and test force retained for 10.0 seconds)

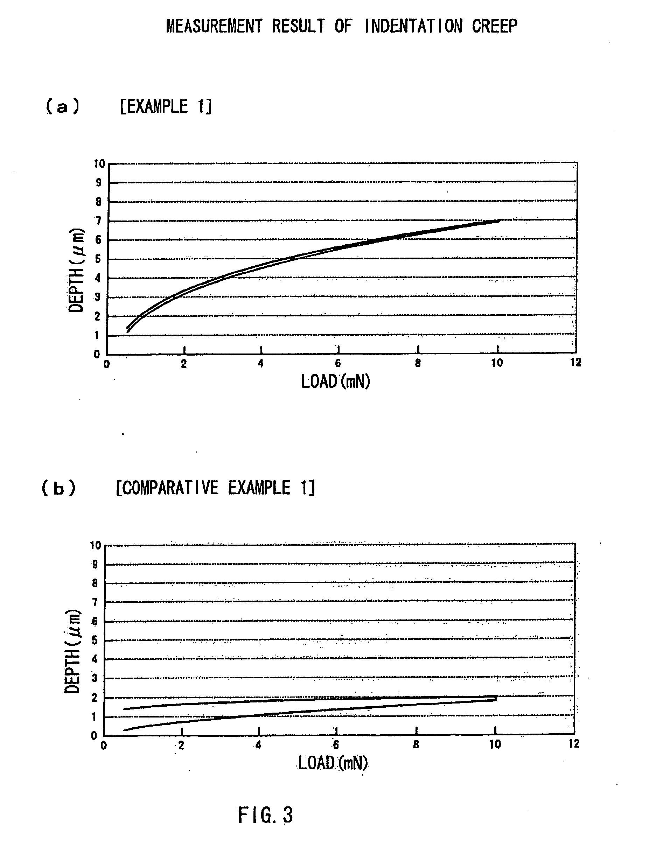

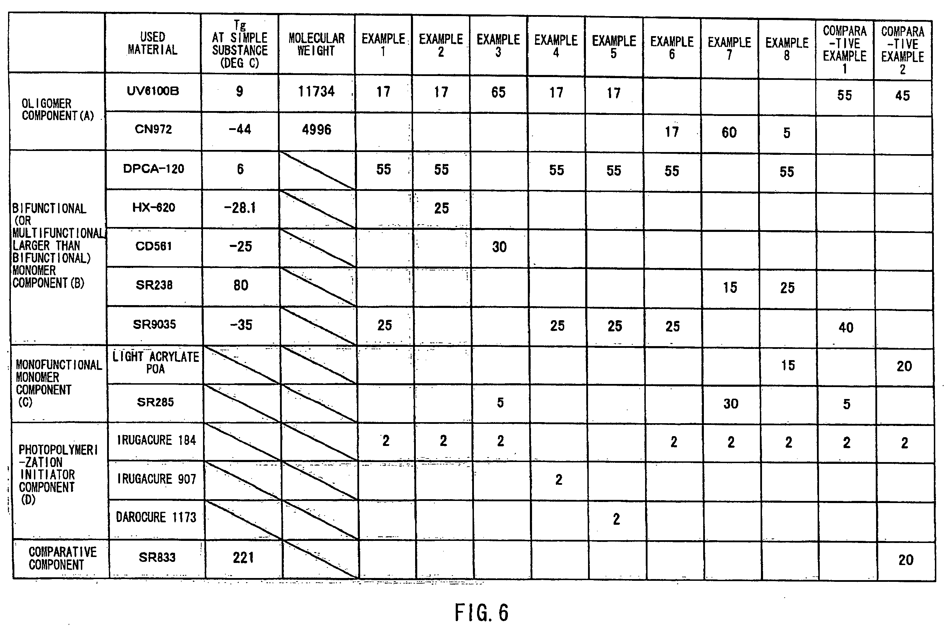

Measurement results of Example 1 and Comparative example 1 (described later with reference to FIG. 6 and the like) under the foregoing conditions are respectively illustrated in FIGS. 3(a) and 3(b).

For the measurement conditions, ISO14577-1 specifies "The thickness of the test specimen shall be at least a larger one out of a thickness 10 times as large as the indentation depth and a thickness three times as large as the radius of a dent." Example 1 had the following physical property values (1) to (4) of the present invention, and was used as a condition suitable for measuring the Martens hardness and the indentation creep of the light transmission layer described in examples, and was taken for purposes of illustration and not limitation.

(1) The elasticity modulus at 25 deg C is in the range from $1*10^7$ Pa to $5*10^8$ Pa, the elasticity modulus at -20 deg C is in the range from $4*10^8$ Pa to $5*10^9$ Pa, and the glass transition point temperature is from -20 deg C to 0 deg C both inclusive.
(2) The Martens hardness is 10 N/mm$^2$ or less.
(3) The indentation creep is 2% or less.
(4) The return value of the indentation depth is in the range from 0.2 to 2.0 microns.

<Return value of indentation depth>

The Martens hardness and the indentation creep in ISO14577-1 include plastic behavior and elastic deformation. This results from the fact that the end of the Vickers indenter and the trigonal pyramid indenter is pointed. A description will be given of a method of accurately measuring the return value of the indentation depth, that is, elasticity deformation. The end of the Vickers square pyramid diamond indenter was vertically polished to obtain a planar indenter in the shape of a square having a side of 50 microns. The planar indenter was applied with load of 1000 mN at a rate of 100 mN/sec, and was retained for 10 seconds in such a state. Next, the load was released at a rate of 100 mN/sec, the dent depth after releasing the load was measured, with which the restoration amount was expressed.

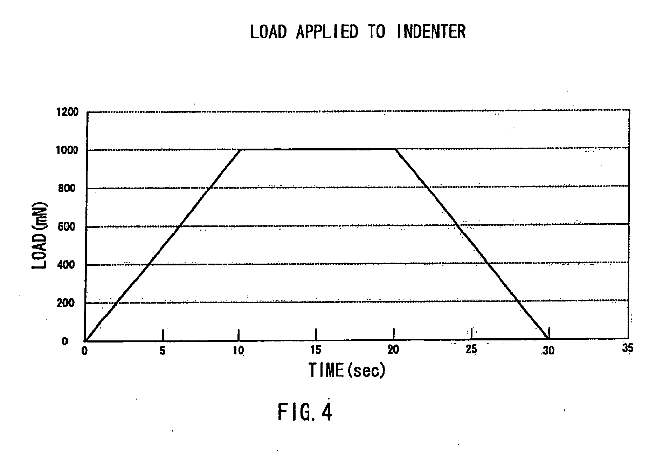

FIG. 4 illustrates a relation between load applied to the indenter and time.

The light transmission layer having the return value of the indentation depth in the range from 0.2 to 2.0 microns has appropriate hardness and appropriate elasticity in a balance manner. Even if load is continuously applied to the light transmission layer for a long time, when the load is removed, the dent due to the load is instantly restored and planarity of the light transmission layer is able to be maintained. In addition, such a light transmission layer has characteristics that warp of the disc associated with environmental change is decreased, and the surface has hardness.

In the case where the indentation depth exceeds 2.0 microns, if load is continuously applied to the light transmission layer for a long time, planarity of the light transmission layer is irreversibly impaired, resulting in a problem that recording and reproduction become significantly difficult.

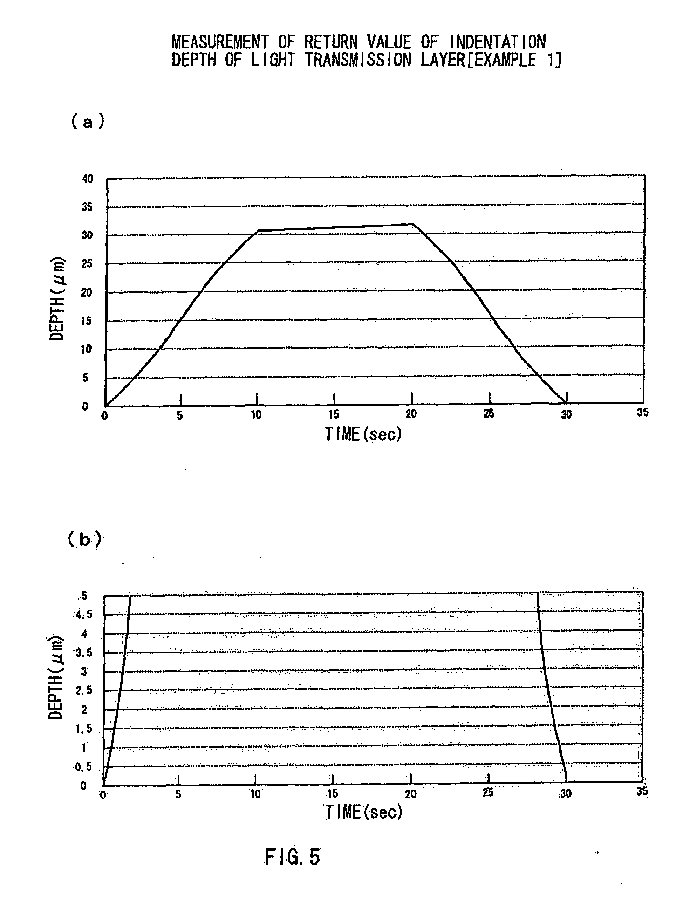

For Example 1, FIG. 5(a) illustrates a measurement result of the return value of the indentation depth of the light transmission layer, and FIG. 5(b) illustrates a diagram obtained by changing the vertical axis of FIG. 5(a) to 5 microns in order to easily read the return value.

Evaluation: in the case where the return value of the indentation depth was in the range from 0.2 to 2.0 microns, it was evaluated as ○, and in the case where the return value of the indentation depth was out of the range from 0.2 to 2.0 microns, it was evaluated as ×.

Next, a description will be given of material structures best for realizing the reactive bridge resin composition of matter of the present invention.

The reactive bridge resin composition of matter as examples has all or part of the following components (A) to (D).

Component (A): oligomer component
Component (B): bifunctional (or multifunctional larger than bifunctional) monomer component
Component (C): monofunctional monomer component
Component (D): photopolymerization initiator component

The reactive bridge resin composition of matter corresponding to the examples of the present invention contains at least the components (A) and (D). Further, reactive bridge resin composition of matter containing the components (A), (B), and (D) or reactive bridge resin composition of matter containing the components (A), (B), (C), and (D) may be envisaged.

As (meta) acrylate oligomer of the component (A), urethane acrylate and epoxy acrylate in which the glass transition point temperature of the simple cured material is from -50 deg C to 15 deg C both inclusive is used.

Such (meta) acrylate oligomer has 2 to 4 (meta) acryloyl groups in the molecule.

The number average molecular weight of urethane/ epoxy (meta) acrylate of the component (A) is preferably from 500 to 10,000 both inclusive.

Two or more types of such (meta) acrylate oligomer may be used together.

Examples of the foregoing epoxy (meta) acrylate oligomer include modified epoxy (meta) acrylate oligomer and modified epoxy (meta) acrylate oligomer or the like.

Examples of the foregoing urethane (meta) acrylate oligomer include various urethane (meta) acrylate oligomers such as alicyclic urethane (meta) acrylate oligomer, aliphatic urethane (meta) acrylate oligomer, and aromatic urethane (meta) acrylate oligomer or the like.

Examples of commercialized products of urethane (meta) acrylate of the component (A) include UV-6100B (Nippon Synthetic Chemical Industry Co., Ltd. make), EB230 and EB8405 (DAICEL-CYTEC Company Ltd. make), and CN9004 (Sartomer Japan Ltd. make).

Examples of commercialized products of epoxy (meta) acrylate of the component (A) include EB3500 (DAICEL-CYTEC Company Ltd. make).

In bifunctional (or multifunctional larger than bifunctional) (meta) acrylate monomer of the component (B), the glass transition point temperature of the simple cured material is from -40 deg C to 90 deg C both inclusive. The bifunctional (or multifunctional larger than bifunctional) (meta) acrylate monomer has an aliphatic residue, an alicyclic residue, and an aromatic residue in a main chain structure or/and a side chain structure.

Examples of the foregoing bifunctional (or multifunctional larger than bifunctional) (meta) acrylate monomer include ethoxy hexanediol diacrylate, caprolactone modified hydroxypivalate neopentyl glycol diacrylate, ethoxy trimethylol propane triacrylate, propoxy trimethylol propane triacrylate, and caprolactone modified dipentaerythritol hexaacrylate or the like.

Two types or more of the foregoing bifunctional (or multifunctional larger than bifunctional) (meta) acrylate monomer may be used together.

Examples of commercialized products of caprolactone modified hydroxypivalate neopentyl glycol diacrylate of the component (B) include HX-620 (Nippon Kayaku Co., Ltd. make). Examples of commercialized products of ethoxy trimethylol propane triacrylate of the component (B) include CD561 and SR9035 (Sartomer Japan Ltd. make).

Examples of commercialized products of propoxy trimethylol propane triacrylate of the component (B) include SR492 (Sartomer Japan Ltd. make).

Examples of commercialized products of caprolactone modified dipentaerythritol hexaacrylate of the component (B) include DPCA-120 (Nippon Kayaku Co., Ltd. make).

In monofunctional (meta) acrylate monomer of the component (C), the glass transition point temperature of the simple cured material is from -50 deg C to 50 deg C both inclusive. The monofunctional (meta) acrylate monomer has an aliphatic residue, an alicyclic residue, and an aromatic residue in a main chain structure or/and a side chain structure.

Examples of the foregoing monofunctional (meta) acrylate monomer include 2-phenoxyethyl acrylate and tetra hydro furfuryl acrylate.

Two types or more of the foregoing monofunctional (meta) acrylate monomer may be used together.

Examples of commercialized products of 2-phenoxyethyl acrylate of the component (C) include light acrylate PO-A (Kyoeisha Cemical Co., Ltd. make). Examples of commercialized products of tetra hydro furfuryl acrylate of the component (C) include SR285 (Sartomer Japan Ltd. make).

As the photopolymerization initiator of the component (D), a photopolymerization initiator in which the absorption end on the long wavelength side of ultraviolet-visible absorption spectrum of 0.1 % acetonitrile solution is under λ=405 nm is preferable.

Examples of the foregoing photopolymerization initiator include 1-hydroxy-cyclohexyl-phenyl-ketone, 2-hydroxy-2-methyl-1-phenyl-propane-1-one, and 2-methyl-1[4-methylthio]phenyl]-2-morpholinopropane-1-one.

Examples of commercialized products of 1-hydroxy-cyclohexyl-phenyl-ketone of the component (D) include IRGACURE 184 (Ciba Japan Co., Ltd. make).

Examples of commercialized products of 2-hydroxy-2-methyl-1-phenyl-propane-1-one of the component (D) include DAROCURE 1173 (Ciba Japan Co., Ltd. make).

Examples of commercialized products of 2-methyl-1[4-methylthio]phenyl]-2-morpholinopropane-1-one of the component (D) include IRGACURE 907 (Ciba Japan Co., Ltd. make).

The glass transition point temperature herein is identified as temperature at which the maximum value of the loss tangent (Tan $\delta$) measured at a vibrational frequency of 1 Hz by a dynamic viscoelasticity measurement device (DMS-6100, Seiko Instruments Inc. make) is indicated.

Next a description will be given in detail of Example 1 to Example 8 that are able to be adopted as a material of the light transmission layer 15. FIG. 6 illustrates a component list of Example 1 to Example 8, Comparative example 1, and Comparative example 2.

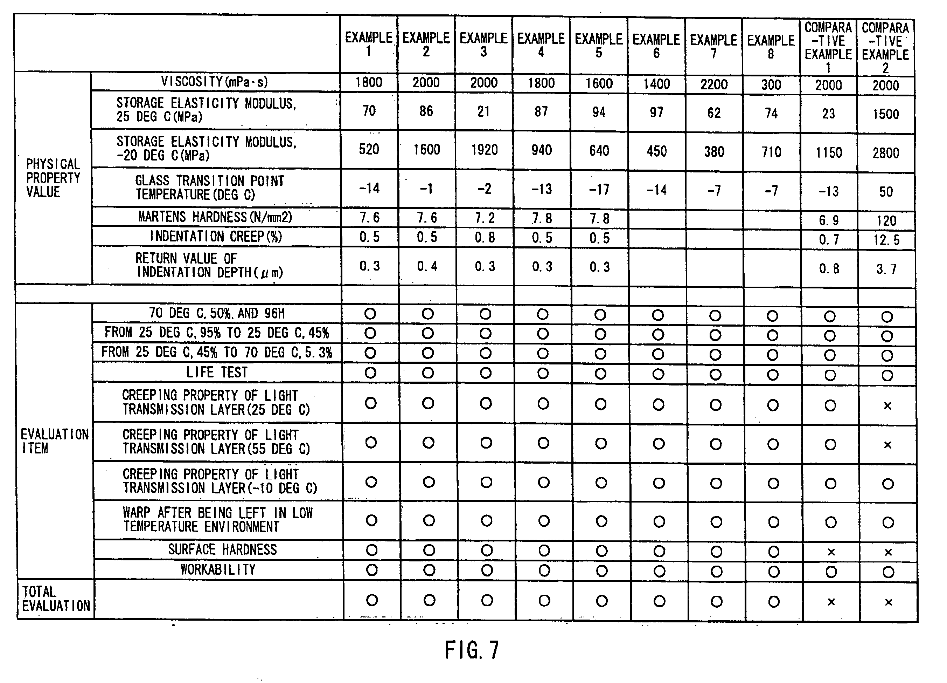

Further, FIG. 7 illustrates physical property values and evaluation results of Example 1 to Example 8, Comparative example 1, and Comparative example 2. As the physical property values, viscosity, storage elasticity modulus (25 deg C and -20 deg C), glass transition point temperature, Martens hardness, indentation creep, and return value of indentation depth are shown. The physical property values of Example 1 to Example 8 satisfy the conditions of claim 6.

As evaluation items, evaluation items of the foregoing respective tests are listed. In the case where the all items are evaluated as ○, the total evaluation is evaluated as ○.

A method of forming a cured material as Example 1 to Example 8, Comparative example 1, and Comparative example 2 was as follows.

An ultraviolet cure composition of matter was sandwiched between PET films, coating was made so that the film thickness after curing became 100 $\mu$m. After that, the ultraviolet cure composition of matter was cured at 50 mJ/cm2 by using a metal halide lamp (UVL-4000M3-N1, lamp output: 120 W/cm, Ushio, Inc. make). The elasticity modulus of the cured film was measured by a viscoelastic spectrometer (DMS6100, Seiko Instruments Inc. make) to obtain a storage elasticity modulus: E', a loss elasticity modulus: E", and a loss tangent: tan $\delta$. The measurement conditions were the vibrational frequency of 1 Hz and the temperature increase rate of 5 deg C/min. A value of a glass transition point temperature: Tg was set to a temperature at which the maximum value of tan $\delta$ was indicated.

The items checked with a backslash in FIG. 6 were not able to be measured since a cured film was not able to be formed.

Example 1 contained one type of the component (A) (17 parts of UV6100B), two types of the component (B) (55 parts of DPCA-120 and 25 parts of SR9035), and one type of the component (D) (2 parts of IRGACURE 184).

Example 1 satisfied the following characteristics, satisfied the all evaluation items, and passed the test.

(1) An oligomer component in which the viscosity at 25 deg C in the state of liquid before cure reaction is from 300 to 3000 m Pa•s both inclusive, and the glass transition point temperature of the simple cured material is from -50 deg C to 15 deg C both inclusive; and a photopolymerization initiator component are contained.

(2) As physical properties after cure reaction, the elasticity modulus at 25 deg C is in the range from $1*10^7$ Pa to $5*10^8$ Pa, the elasticity modulus at -20 deg C is in the range from $4*10^8$ Pa to $5*10^9$ Pa, and the glass transition point temperature is from -20 deg C to 0 deg C both inclusive.

Example 2 contained one type of the component (A) (17 parts of UV6100B), two types of the component (B) (55 parts of DPCA-120 and 25 parts of HX-620), and one type of the component (D) (2 parts of IRGACURE 184).

The difference from Example 1 was selection of the component (B), which meant while the elasticity modulus at 25 deg C was the same as that of Example 1, the glass transition point temperature was increased to evaluate the influence and the effect thereof.

Example 3 was an example in which the component ratio of the oligomer component was increased as much as possible. Example 3 contained one type of the component (A) (65 parts of UV6100B), one type of the component (B) (30 parts of CD561), one type of the component (C) (5 parts of SR285), and one type of the component (D) (2 parts of IRGACURE 184).

Example 4 was an example obtained by substituting IRGACURE 184 of the component (D) in Example 1 with IRGACURE 907 of the component (D). By adding the same amount of IRGACURE 907 as the amount of IRGACURE 184, favorable cure property was able to be obtained.

Example 5 was an example obtained by substituting IRGACURE 184 of the component (D) in Example 1 with DAROCURE 1173 of the component (D). By adding the same amount of DAROCURE 1173 as the amount of IRGACURE 184, favorable cure property was able to be obtained.

Example 6 was an example obtained by substituting UV6100B of the component (A) in Example 1 with CN972 of the component (A). By adding the same amount of CN972 as the amount of UV6100B, favorable cure property was able to be obtained.

Example 7 was an example in which the component ratio of the oligomer component was increased as much as possible. Example 7 contained one type of the component (A) (60 parts of CN972), one type of the component (B) (15 parts of SR238), one type of the component (C) (30 parts of SR285), and one type of the component (D) (2 parts of IRGACURE 184).

Example 8 contained one type of the component (A) (5 parts of CN972), two types of the component (B) (55 parts of DPCA-120 and 25 parts of SR238), one type of the component (C) (15 parts of light acrylate POA), and one type of the component (D) (2 parts of IRGACURE 184).

The foregoing Examples 2 to 8 all satisfied the characteristics similar to those of Example 1, satisfied the all evaluation items, and passed the test.

Comparative example 1 contained one type of the component (A) (55 parts of UV6100B), two types of the component (B) (40 parts of SR9035), one type of the component (C) (5 parts of SR285), and one type of the component (D) (2 parts of IRGACURE 184).

Comparative example 1 satisfied characteristics similar to those of Example 1. However, the surface hardness was low, and the first structure did not pass the test. In this case, in the case where a resin with a high elasticity modulus and a high hardness is spin-coated on the light transmission layer 15 of Comparative example 1, and thereby the hard coat layer 16 in which the elasticity modulus at 25 deg C is from $1*10^8$ Pa to $5*10^9$ Pa both inclusive, and the glass transition point temperature is from 60 deg C to 150 deg C both inclusive is formed, the characteristics would pass the test.

Comparative example 2 contained one type of the component (A) (45 parts of UV6100B), one type of the component (C) (20 parts of light acrylate), one type of the component (D) (2 parts of IRGACURE 184), and a monomer (in which the glass transition point temperature of the monomer simple cured material was 187 deg C) component (20 parts of SR833, Sartomer Japan Ltd. make) not corresponding to the conditions of Example 1. Differently from Examples 1 to 8, in Comparative example 2, creeping property of the light transmission layer did not pass the test. Only the creeping property at -10 deg C passed the test. It resulted from the fact that the elasticity modulus in -10 deg C was high, which was different characteristics from the object of the present invention.

From the foregoing experiment, it was concluded that by securing the following characteristics (1) to (4) as the light transmission layer 15 of the optical disc, the problem that a static load is continuously applied to the light transmission layer 15 for a long time and thereby the light transmission layer 15 is irreversibly deformed, the smooth characteristics of the surface thereof are damaged, resulting in trouble in recording or reproducing information is able to be prevented.

(1) The elasticity modulus at 25 deg C of the light transmission layer 15 is from $1*10^7$ Pa to $5*10^8$ Pa both inclusive, the elasticity modulus at -20 deg C is from $4*10^8$ Pa to $5*10^9$ Pa both inclusive, and the glass transition point temperature of the light transmission layer 15 is from -20 deg C to 0 deg C both inclusive.

(2) The Martens hardness (HM) of the light transmission layer 15 is 10 N/mm² or less.

In the light transmission layer 15 in the foregoing range, when an external force is applied, a stress is able to be dispersed inside the light transmission layer, destruction of the light transmission layer is able to be prevented, and recorded information is able to be protected.

Further, a volume expansion/shrinkage portion of the light transmission layer 15 associated with an internal stress generated in curing and temperature and humidity change is able to be relaxed inside the light transmission layer, and warp of the optical disc is able to be inhibited to the minimum.

Due to its flexibility, sufficient contact force with the substrate material and the reflection film 14 is able to be secured.

In the case of out of the foregoing range, the internal stress generated in curing generates warp of the optical disc, the warp of the optical disc is further increased by temperature and humidity change, and accordingly the standards of the optical disc are not satisfied.

(3) The indentation creep ($C_{IT}$) of the light transmission layer 15 is 2% or less.

In the light transmission layer 15 in the foregoing range, even if a static load is continuously applied for a long time, plastic deformation is not generated (creep is not generated), smooth characteristics of the surface are maintained, and thus there is no trouble in recording or reproducing information.

In the case of out of the foregoing range, if a static load is continuously applied to the light transmission layer 15, plastic deformation is generated, smooth characteristics of the surface are impaired, and thus recording or reproducing information is not able to be accurately performed.

(4) The return value of the indentation depth of the light transmission layer 15 is in the range from 0.2 to 2.9 microns.

In the light transmission layer 15 in the foregoing range, even if an external force/load is applied and thereby the surface thereof is deformed, when the external force/the load is removed, the light transmission layer 15 is instantly restored, and the smooth characteristics of the surface are maintained. Thus, there is no problem in recording or reproducing information.

In the case where the return value of the indentation depth exceeds 2.0 microns, the deformation due to the external force/the load is left in its entirety (for a certain time: from several minutes to several hours), and recording or reproducing information is not able to be performed accurately.

As evidenced by the foregoing description, the optical disc of this embodiment is formed from a laminar structure having the disc substrate 12, the one or the plurality of information signal sections (13, or 21 and 23), the reflection film 14, and the light transmission layer 15 formed closer to the information readout face side than the reflection film 14. In the light transmission layer 15, the elasticity modulus at 25 deg C is in the range from $1*10^7$ Pa to $5*10^8$ Pa, the elasticity modulus at -20 deg C is in the range from $4*10^8$ Pa to $5*10^9$ Pa, and the glass transition point temperature is from -20 deg C to 0 deg C both inclusive.

Further, the Martens hardness of the light transmission layer 15 is 10 N/mm$^2$ or less.

Further, the indentation creep of the light transmission layer 15 is 2% or less.

Further, the return value of the indentation depth of the light transmission layer 15 is in the range from 0.2 to 2.0 microns.

Further, the structure of the optical disc has the hard coat layer 16 in which the elasticity modulus at 25 deg C is from $1*10^8$ Pa to $5*10^9$ Pa both inclusive, and the glass transition point temperature is from 60 deg C to 150 deg C both inclusive on the information readout face side of the light transmission layer 15.

Thereby, the problem that in the case where a static load is continuously applied for a long time, planarity of the light transmission layer 15 is irreversibly impaired, and recording and reproduction become significantly difficult is resolved. For example, even if the optical disc is stored in an unwoven cloth type disc case, the shape thereof is not transcribed, and reliability of the optical disc is able to be improved.

Further, even if an impactive force is applied to the light transmission layer 15, the force is absorbed inside the light transmission layer, and the light transmission layer 15 is able to be restored without destroying the recorded information.

Further, even under various temperature and humidity conditions and intense temperature and humidity change (for example, change from 25 deg C and 95% RH to 25 deg C and 45% RH in the sudden change test) under which the optical disc is handled, disc warp change is able to fall within the scope of the standards, and the mechanical characteristics are not impaired.

Accordingly, durability necessary for information recording mediums is able to be secured.

Further, the reactive bridge resin composition of matter according to this embodiment contains the oligomer component in which the viscosity at 25 deg C in the state of liquid before cure reaction is from 300 to 3000 m Pa•s both inclusive, and the glass transition point temperature of the simple cured material is from -50 deg C to 15 deg C both inclusive; and a photopolymerization initiator component. In addition, as physical properties after cure reaction, the elasticity modulus at 25 deg C is in the range from $1*10^7$ Pa to $5*10^8$ Pa, the elasticity modulus at -20 deg C is in the range from $4*10^8$ Pa to $5*10^9$ Pa, and the glass transition point temperature is from -20 deg C to 0 deg C both inclusive.

Further, the reactive bridge resin composition of matter according to this embodiment contains the bifunctional (or multifunctional larger than bifunctional) monomer component in which the glass transition point temperature of the simple cured material is from -40 deg C to 90 deg C both inclusive. In some cases, further, the reactive bridge resin composition of matter according to this embodiment contains the monofunctional monomer component.

Further, with respect to 100 parts by mass as the total amount of respective components, for the component (A) (oligomer component), the amount of (meta) acrylate oligomer in which the glass transition point temperature of the composition simple body is from -50 deg C to 15 deg C both inclusive is from 10 to 80 parts by mass. The number average molecular weight of such (meta) acrylate is from 500 to 10,000 both inclusive.

For the component (D) (photopolymerization initiator component), the amount of the photopolymerization initiator in which the absorption end on the long wavelength side of ultraviolet-visible absorption spectrum of 0.1% acetonitrile solution is under $\lambda$=405 nm is from 0.5 to 10 parts by mass both inclusive.

Further, for the component (B) (the bifunctional (or multifunctional larger than bifunctional) monomer component), the amount of the bifunctional (or multifunctional larger than bifunctional) (meta) acrylate monomer in which the glass transition point temperature of the composition simple body is from -40 deg C to 90 deg C both inclusive is from 20 to 60 parts by mass both inclusive.

Further, for the component (C) (monofunctional monomer component), the amount of the monofunctional (meta) acrylate is from 10 to 30 parts by mass both inclusive.

As such a reactive bridge resin composition of matter, the material suitable for generating the transmission layer 15 of the optical disc is able to be provided.

The present invention has been described with reference to the embodiment. However, the present invention is not limited to the foregoing embodiment, and various modifications may be made. For example, the present invention is able to be applied to an optical disc other than the Blu-ray Disc or other type of optical recording medium.

**Claims**

1. An optical recording medium formed from a laminar structure comprising:

    a substrate section;
    one or a plurality of information signal sections for recording or reproducing an information signal being located on an information readout face side viewed from the substrate section;
    a reflection film formed on the information signal section; and
a light transmission layer formed closer to the information readout face side than the reflection film, wherein in the light transmission layer, an elasticity modulus at 25 deg C is in the range from 1*10$^7$ Pa to 5* 10$^8$ Pa, an elasticity modulus at -20 deg C is in the range from 4* 10$^8$ Pa to 5* 10$^9$ Pa, and a glass transition point temperature is from -20 deg C to 0 deg C both inclusive.

2. The optical recording medium according to claim 1, wherein a Martens hardness of the light transmission layer is 10 N/mm$^2$ or less.

3. The optical recording medium according to claim 1, wherein an indentation creep of the light transmission layer is 2% or less.

4. The optical recording medium according to claim 1, wherein a return value of an indentation depth of the light transmission layer is in the range from 0.2 to 2.0 microns.

5. The optical recording medium according to claim 1 comprising:

a hard coat layer in which an elasticity modulus at 25 deg C is from 1 * 10$^8$ to 5*10$^9$ both inclusive, and a glass transition point temperature is from 60 deg C to 150 deg C both inclusive on the information readout face side of the light transmission layer.

6. A liquid active energy line cure reactive bridge resin composition of matter comprising:

an oligomer component in which a viscosity at 25 deg C in the state of liquid before cure reaction is from 300 to 3000 m Pa•s both inclusive, and a glass transition point temperature of a simple cured material is from -50 deg C to 15 deg C both inclusive; and
a photopolymerization initiator component, wherein as physical properties after cure reaction, an elasticity modulus at 25 deg C is in a range from 1 * 10$^7$ Pa to 5* 10$^8$ Pa, an elasticity modulus at -20 deg C is in a range from 4* 10$^8$ Pa to 5* 10$^9$ Pa, and a glass transition point temperature is from -20 deg C to 0 deg C both inclusive.

7. The reactive bridge resin composition of matter according to claim 6 further comprising:

a bifunctional (or multifunctional larger than bifunctional) monomer component in which a glass transition point temperature of a simple cured material is from -40 deg C to 90 deg C both inclusive.

8. The reactive bridge resin composition of matter according to claim 7 further comprising:

a monofunctional monomer component.

9. The reactive bridge resin composition of matter according to claim 6, wherein with respect to 100 parts by mass as a total amount of respective components, for the oligomer component, an amount of (meta) acrylate oligomer in which a glass transition point temperature of a composition simple body is from -50 deg C to 15 deg C both inclusive is from 10 to 80 parts by mass both inclusive, and the number average molecular weight of the (meta) acrylate is from 500 to 10,000 both inclusive, and for the photopolymerization initiator component, an amount of a photopolymerization initiator in which an absorption end on the long wavelength side of ultraviolet-visible absorption spectrum of 0.1 % acetonitrile solution is under λ=405 nm is from 0.5 to 10 parts by mass both inclusive.

10. The reactive bridge resin composition of matter according to claim 7, wherein with respect to 100 parts by mass as a total amount of respective components, for the oligomer component, an amount of (meta) acrylate oligomer in which a glass transition point temperature of a composition simple body is from -50 deg C to 15 deg C both inclusive is from 10 to 80 parts by mass both inclusive, and the number average molecular weight of the (meta) acrylate is from 500 to 10,000 both inclusive, for the photopolymerization initiator component, an amount of a photopolymerization initiator in which an absorption end on the long wavelength side of ultraviolet-visible absorption spectrum of 0.1 % acetonitrile solution is under λ=405 nm is from 0.5 to 10 parts by mass both inclusive, and for the bifunctional (or multifunctional larger than bifunctional) monomer component, an amount of bifunctional (or multifunctional larger than bifunctional) (meta) acrylate monomer in which a glass transition point temperature of a composition simple body is from -40 deg C to 90 deg C both inclusive is from 20 to 60 parts by mass both inclusive.

11. The reactive bridge resin composition of matter according to claim 8, wherein with respect to 100 parts by mass as a total amount of respective components, for the oligomer component, an amount of (meta) acrylate oligomer in which a glass transition point temperature of a composition simple body is from -50 deg C to 15 deg C both inclusive is from 10 to 80 parts by mass both inclusive, and the number average molecular weight of the (meta) acrylate is from 500 to 10,000 both inclusive,

for the photopolymerization initiator component, an amount of a photopolymerization initiator in which an absorption end on the long wavelength side of ultraviolet-visible absorption spectrum of 0.1 % acetonitrile solution is under λ=405 nm is from 0.5 to 10 parts by mass both inclusive,

for the bifunctional (or multifunctional larger than bifunctional) monomer component, an amount of bifunctional (or multifunctional larger than bifunctional) (meta) acrylate monomer in which a glass transition point temperature of a composition simple body is from -40 deg C to 90 deg C both inclusive is from 20 to 60 parts by mass both inclusive, and

for the monofunctional monomer component, an amount of monofunctional (meta) acrylate is from 10 to 30 parts by mass both inclusive.

## Patentansprüche

1. Optisches Aufzeichnungsmedium, gebildet aus einer laminaren Struktur, umfassend:

    einen Substratabschnitt;
    einen oder eine Vielzahl von Informationssignalabschnitten zum Aufzeichnen oder Wiedergeben eines Informationssignals, angeordnet an einer Informationsauslesefläche-Seite vom Substratabschnitt aus gesehen;
    einen Reflektionsfilm, der auf dem Informationssignalabschnitt gebildet ist; und
    eine Lichttransmissionsschicht, die näher an der Informationsauslesefläche-Seite als der Reflektionsfilm gebildet ist, wobei ein Elastizitätsmodul in der Lichttransmissionsschicht bei 25 Grad C im Bereich von $1*10^7$ Pa bis $5*10^8$ Pa liegt, ein Elastizitätsmodul bei -20 Grad C im Bereich von $4*10^8$ Pa bis $5*10^9$ Pa liegt und eine Glasübergangspunkt-Temperatur von, jeweils einschließlich, -20 Grad C bis 0 Grad C beträgt.

2. Optisches Aufzeichnungsmedium gemäß Anspruch 1, wobei eine Martens-Härte der Lichttransmissionsschicht 10 N/mm² oder weniger beträgt.

3. Optisches Aufzeichnungsmedium gemäß Anspruch 1, wobei ein Eindrückkriechen der Lichttransmissionsschicht 2% oder weniger beträgt.

4. Optisches Aufzeichnungsmedium gemäß Anspruch 1, wobei ein Rückkehrwert einer Eindrücktiefe der Lichttransmissionsschicht im Bereich von 0,2 bis 2,0 Mikrometer liegt.

5. Optisches Aufzeichnungsmedium gemäß Anspruch 1, umfassend:

eine harte Deckschicht, bei der ein Elastizitätsmodul bei 25 Grad C im Bereich von, jeweils einschließlich, $1*10^8$ bis $5*10^9$ liegt und eine Glasübergangspunkt-Temperatur von, jeweils einschließlich, 60 Grad C bis 150 Grad C beträgt, auf der Informationsauslesefläche-Seite der Lichttransmissionsschicht.

6. Flüssige, aktive, Energy-Linehärtungsreaktionsfähige Brückenharz-Stoffzusammensetzung, umfassend:

    eine Oligomerkomponente, bei der eine Viskosität bei 25 Grad C im flüssigen Zustand vor der Härtungsreaktion von, jeweils einschließlich, 300 bis 3000 mPa.s beträgt und eine Glasübergangspunkt-Temperatur eines einfachen gehärteten Materials von, jeweils einschließlich, -50 Grad C bis 15 Grad C beträgt; und
    eine Photopolymerisationsinitiator-Komponente, bei der als physikalische Eigenschaften nach der Härtungsreaktion ein Elastizitätsmodul bei 25 Grad C in einem Bereich von $1*10^7$ Pa bis $5*10^8$ Pa liegt, ein Elastizitätsmodul bei -20 Grad C in einem Bereich von $4*10^8$ Pa bis $5*10^9$ Pa liegt und eine Glasübergangspunkt-Temperatur von, jeweils einschließlich, -20 Grad C bis 0 Grad C beträgt.

7. Reaktionsfähige Brückenharz-Stoffzusammensetzung gemäß Anspruch 6, ferner umfassend:

    eine bifunktionelle (oder höher als bifunktionell multifunktionelle) Monomerkomponente, bei der eine Glasübergangspunkt-Temperatur eines einfachen gehärteten Materials von, jeweils einschließlich, -40 Grad C bis 90 Grad C beträgt.

8. Reaktionsfähige Brückenharz-Stoffzusammensetzung gemäß Anspruch 7, ferner umfassend:

    eine monofunktionelle Monomerkomponente.

9. Reaktionsfähige Brückenharz-Stoffzusammensetzung gemäß Anspruch 6, wobei bezogen auf 100 Masseteile als Gesamtmenge der entsprechenden Komponenten für die Oligomerkomponente eine Menge an (Meta)acrylat-Oligomer, bei dem eine Glasübergangspunkt-Temperatur eines einfachen Körpers der Zusammensetzung von, jeweils einschließlich, -50 Grad C bis 15 Grad C beträgt, von, jeweils einschließlich, 10 bis 80 Masseteile beträgt und das anzahlgemittelte Molekulargewicht des (Meta)acrylats von, jeweils einschließlich, 500 bis 10.000 beträgt und

für die Photopolymerisationsinitiator-Komponente eine Menge an einem Photopolymerisationsinitiator, bei dem ein Absorptionsende an der Langwellenlängen-Seite des Ultraviolett/sichtbaren Absorptionsspektrums einer 0,1%-Acetonitrillösung unter λ = 405 nm liegt, von, jeweils einschließlich, 0,5 bis 10 Masseteile beträgt.

10. Reaktionsfähige Brückenharz-Stoffzusammensetzung gemäß Anspruch 7, wobei bezogen auf 100 Masseteile als Gesamtmenge der entsprechenden Komponenten für die Oligomerkomponente eine Menge an (Meta)acrylat-Oligomer, bei dem eine Glasübergangspunkt-Temperatur eines einfachen Körpers der Zusammensetzung von, jeweils einschließlich, -50 Grad C bis 15 Grad C beträgt, von, jeweils einschließlich, 10 bis 80 Masseteile beträgt und das anzahlgemittelte Molekulargewicht des (Meta)acrylats von, jeweils einschließlich, 500 bis 10.000 beträgt,
für die Photopolymerisationsinitiator-Komponente eine Menge an einem Photopolymerisationsinitiator, bei dem ein Absorptionsende an der Langwellenlängen-Seite des Ultraviolett/sichtbaren Absorptionsspektrums einer 0,1%-Acetonitrillösung unter λ = 405 nm liegt, von, jeweils einschließlich, 0,5 bis 10 Masseteile beträgt und
für die bifunktionelle (oder höher als bifunktionell multifunktionelle) Monomerkomponente eine Menge an bifunktionellem (oder höher als bifunktionell multifunktionellem) (Meta)acrylat-Monomer, bei dem eine Glasübergangspunkt-Temperatur eines einfachen Körpers der Zusammensetzung von, jeweils einschließlich, - 40 Grad C bis 90 Grad C beträgt, von, jeweils einschließlich, 20 bis 60 Masseteile beträgt.

11. Reaktionsfähige Brückenharz-Stoffzusammensetzung gemäß Anspruch 8, wobei bezogen auf 100 Masseteile als Gesamtmenge der entsprechenden Komponenten für die Oligomerkomponente eine Menge an (Meta)acrylat-Oligomer, bei dem eine Glasübergangspunkt-Temperatur eines einfachen Körpers der Zusammensetzung von, jeweils einschließlich, -50 Grad C bis 15 Grad C beträgt, von, jeweils einschließlich, 10 bis 80 Masseteile beträgt und das anzahlgemittelte Molekulargewicht des (Meta)acrylats von, jeweils einschließlich, 500 bis 10.000 beträgt,
für die Photopolymerisationsinitiator-Komponente eine Menge an einem Photopolymerisationsinitiator, bei dem ein Absorptionsende an der Langwellenlängen-Seite des Ultraviolett/sichtbaren Absorptionsspektrums einer 0,1%-Acetonitrillösung unter λ = 405 nm liegt, von, jeweils einschließlich, 0,5 bis 10 Masseteile beträgt
für die bifunktionelle (oder höher als bifunktionell multifunktionelle) Monomerkomponente eine Menge an bifunktionellem (oder höher als bifunktionell multifunktionellem) (Meta)acrylat-Monomer, bei dem eine Glasübergangspunkt-Temperatur eines einfachen Körpers der Zusammensetzung von, jeweils einschließlich, - 40 Grad C bis 90 Grad C beträgt, von, jeweils einschließlich, 20 bis 60 Masseteile beträgt und
für die monofunktionelle Monomerkomponente eine Menge an monofunktionellem (Meta)acrylat von, jeweils einschließlich, 10 bis 30 Masseteile beträgt.

**Revendications**

1. Support d'enregistrement optique formé d'une structure à feuillets comprenant :

    une section de substrat ;
    une ou une pluralité de sections de signal d'information permettant d'enregistrer ou de reproduire un signal d'information qui se situe sur une face avant de lecture de l'information en regardant depuis la section de substrat ;
    un film réfléchissant formé sur la section de signal d'information ; et
    une couche de transmission de la lumière formée plus près de la face avant de lecture de l'information que le film réfléchissant, dans lequel, dans la couche de transmission de la lumière, le module d'élasticité à 25° C est dans la fourchette de $1*10^7$ Pa à $5*10^8$ Pa,
    le module d'élasticité à -20 °C est dans la fourchette de $4*10^8$ Pa à $5*10^9$ Pa, et
    la température du point de transition vitreuse est de -20 °C à 0 °C, bornes comprises.

2. Support d'enregistrement optique selon la revendication 1, dans lequel la dureté Martens de la couche de transmission de la lumière est de 10 N/mm$^2$ ou moins.

3. Support d'enregistrement optique selon la revendication 1, dans lequel le fluage à la pénétration de la couche de transmission de la lumière est de 2% ou moins.

4. Support d'enregistrement optique selon la revendication 1, dans lequel la valeur de récurrence de la profondeur de pénétration de la couche de transmission de la lumière est dans la fourchette de 0,2 à 2,0 microns.

5. Support d'enregistrement optique selon la revendication 1 comprenant :

    une couche de revêtement dur dans laquelle le module d'élasticité à 25 °C est de $1*10^8$ à $5*10^9$, bornes comprises, et la température du point de transition vitreuse est de 60 °C à 150 °C, bornes comprises, sur la face avant de lecture de l'information de la couche de transmission de la lumière.

6. Composition de matière en résine réticulable réactive liquide à durcissement par raie d'énergie active comprenant :

un constituant oligomère dans lequel la viscosité à 25 °C dans l'état liquide avant la réaction de durcissement est de 300 à 3000 m Pa.s, bornes comprises, et

la température du point de transition vitreuse d'un simple matériau durci est de -50 °C à 15 °C, bornes comprises ; et

un constituant amorceur de photopolymérisation, dans lequel, comme propriétés physiques après la réaction de durcissement, le module d'élasticité à 25 °C est dans une fourchette de $1*10^7$ Pa à $5*10^8$ Pa,

le module d'élasticité à -20 °C est dans une fourchette de $4*10^8$ Pa à $5*10^9$ Pa, et

la température du point de transition vitreuse est de -20 °C à 0 °C, bornes comprises.

7. Composition de matière en résine réticulable réactive selon la revendication 6 comprenant en outre :

un constituant monomère bifonctionnel (ou multifonctionnel plus que bifonctionnel) dans lequel la température du point de transition vitreuse d'un simple matériau durci est de -40 °C à 90 °C, bornes comprises.

8. Composition de matière en résine réticulable réactive selon la revendication 7 comprenant en outre :

un constituant monomère monofonctionnel.

9. Composition de matière en résine réticulable réactive selon la revendication 6, dans laquelle rapportée à 100 parties en masse pour ce qui est de la quantité totale des constituants respectifs, pour le constituant oligomère, la quantité d'oligomère (méta)acrylate dans lequel la température du point de transition vitreuse du simple corps de la composition est de -50 °C à 15 °C, bornes comprises, est de 10 à 80 parties en masse, bornes comprises, et la masse moléculaire moyenne en nombre du (méta)acrylate est de 500 à 10 000, bornes comprises, et

pour le constituant amorceur de photopolymérisation, la quantité d'amorceur de photopolymérisation dans lequel l'extrémité d'absorption du côté des longues longueurs d'onde du spectre d'absorption ultraviolet-visible d'une solution à 0,1% dans l'acétonitrile est inférieure à $\lambda$ = 405 nm est de 0,5 à 10 parties en masse, bornes comprises.

10. Composition de matière en résine réticulable réactive selon la revendication 7, dans laquelle, rapportée à 100 parties en masse pour ce qui est de la quantité totale des constituants respectifs, pour le constituant oligomère, la quantité d'oligomère (méta)acrylate dans lequel la température du point de transition vitreuse du simple corps de la composition est de -50 °C à 15 °C, bornes comprises, est de 10 à 80 parties en masse, bornes comprises, et la masse moléculaire moyenne en nombre du (méta)acrylate est de 500 à 10 000, bornes comprises, pour le constituant amorceur de photopolymérisation, la quantité d'amorceur de photopolymérisation dans lequel l'extrémité d'absorption du côté des longues longueurs d'onde du spectre d'absorption ultraviolet-visible d'une solution à 0,1% dans l'acétonitrile est inférieure à $\lambda$ = 405 nm est de 0,5 à 10 parties en masse, bornes comprises, et pour le constituant monomère bifonctionnel (ou multifonctionnel plus que bifonctionnel), la quantité de monomère (méta)acrylate bifonctionnel (ou multifonctionnel plus que bifonctionnel) dans lequel la température du point de transition vitreuse du simple corps de la composition est de -40 °C à 90 °C, bornes comprises, est de 20 à 60 parties en masse, bornes comprises.

11. Composition de matière en résine réticulable réactive selon la revendication 8, dans laquelle, rapportée à 100 parties en masse pour ce qui est de la quantité totale des constituants respectifs, pour le constituant oligomère, la quantité d'oligomère (méta)acrylate dans lequel la température du point de transition vitreuse du simple corps de la composition est de -50 °C à 15 °C, bornes comprises, est de 10 à 80 parties en masse, bornes comprises, et la masse moléculaire moyenne en nombre du (méta)acrylate est de 500 à 10 000, bornes comprises, pour le constituant amorceur de photopolymérisation, la quantité d'amorceur de photopolymérisation dans lequel l'extrémité d'absorption du côté des longues longueurs d'onde du spectre d'absorption ultraviolet-visible d'une solution à 0,1% dans l'acétonitrile est inférieure à $\lambda$ = 405 nm est de 0,5 à 10 parties en masse, bornes comprises, pour le constituant monomère bifonctionnel (ou multifonctionnel plus que bifonctionnel), la quantité de monomère (méta)acrylate bifonctionnel (ou multifonctionnel plus que bifonctionnel) dans lequel la température du point de transition vitreuse du simple corps de la composition est de -40 °C à 90 °C, bornes comprises, est de 20 à 60 parties en masse, bornes comprises, et pour le constituant monomère monofonctionnel, la quantité de (méta)acrylate monofonctionnel est de 10 à 30 parties en masse, bornes comprises.

FIG. 1

FIG. 2

MEASUREMENT RESULT OF INDENTATION CREEP

(a)    [EXAMPLE 1]

(b)    [COMPARATIVE EXAMPLE 1]

FIG. 3

LOAD APPLIED TO INDENTER

FIG. 4

MEASUREMENT OF RETURN VALUE OF INDENTATION
DEPTH OF LIGHT TRANSMISSION LAYER[EXAMPLE 1]

(a)

(b)

FIG. 5

| | USED MATERIAL | Tg AT SIMPLE SUBSTANCE (DEG C) | MOLECULAR WEIGHT | EXAMPLE 1 | EXAMPLE 2 | EXAMPLE 3 | EXAMPLE 4 | EXAMPLE 5 | EXAMPLE 6 | EXAMPLE 7 | EXAMPLE 8 | COMPARA -TIVE EXAMPLE 1 | COMPARA -TIVE EXAMPLE 2 |
|---|---|---|---|---|---|---|---|---|---|---|---|---|---|
| OLIGOMER COMPONENT (A) | UV6100B | 9 | 11734 | 17 | 17 | 65 | 17 | 17 | | | | 55 | 45 |
| | CN972 | -44 | 4996 | | | | | | 17 | 60 | 5 | | |
| BIFUNCTIONAL (OR MULTIFUNCTIONAL LARGER THAN BIFUNCTIONAL) MONOMER COMPONENT (B) | DPCA-120 | 6 | | 55 | 55 | | 55 | 55 | 55 | | 55 | | |
| | HX-620 | -28.1 | | | 25 | | | | | | | | |
| | CD561 | -25 | | | | 30 | | | | | | | |
| | SR238 | 80 | | | | | | | | 15 | 25 | | |
| | SR9035 | -35 | | 25 | | | 25 | 25 | 25 | | | 40 | |
| MONOFUNCTIONAL MONOMER COMPONENT (C) | LIGHT ACRYLATE POA | | | | | | | | | | 15 | | 20 |
| | SR285 | | | | | 5 | | | | 30 | | 5 | |
| PHOTOPOLYMERI -ZATION INITIATOR COMPONENT (D) | IRUGACURE 184 | | | 2 | 2 | 2 | | | 2 | 2 | 2 | 2 | 2 |
| | IRUGACURE 907 | | | | | | 2 | | | | | | |
| | DAROCURE 1173 | | | | | | | 2 | | | | | |
| COMPARATIVE COMPONENT | SR833 | 221 | | | | | | | | | | | 20 |

FIG. 6

| | | EXAMPLE 1 | EXAMPLE 2 | EXAMPLE 3 | EXAMPLE 4 | EXAMPLE 5 | EXAMPLE 6 | EXAMPLE 7 | EXAMPLE 8 | COMPARA-TIVE EXAMPLE 1 | COMPARA-TIVE EXAMPLE 2 |
|---|---|---|---|---|---|---|---|---|---|---|---|
| PHYSICAL PROPERTY VALUE | VISCOSITY (mPa·s) | 1800 | 2000 | 2000 | 1800 | 1600 | 1400 | 2200 | 300 | 2000 | 2000 |
| | STORAGE ELASTICITY MODULUS, 25 DEG C (MPa) | 70 | 86 | 21 | 87 | 94 | 97 | 62 | 74 | 23 | 1500 |
| | STORAGE ELASTICITY MODULUS, -20 DEG C (MPa) | 520 | 1600 | 1920 | 940 | 640 | 450 | 380 | 710 | 1150 | 2800 |
| | GLASS TRANSITION POINT TEMPERATURE (DEG C) | -14 | -1 | -2 | -13 | -17 | -14 | -7 | -7 | -13 | 50 |
| | MARTENS HARDNESS (N/mm2) | 7.6 | 7.6 | 7.2 | 7.8 | 7.8 | | | | 6.9 | 120 |
| | INDENTATION CREEP (%) | 0.5 | 0.5 | 0.8 | 0.5 | 0.5 | | | | 0.7 | 12.5 |
| | RETURN VALUE OF INDENTATION DEPTH ($\mu$m) | 0.3 | 0.4 | 0.3 | 0.3 | 0.3 | | | | 0.8 | 3.7 |
| | | | | | | | | | | | |
| EVALUATION ITEM | 70 DEG C, 50%, AND 96H | O | O | O | O | O | O | O | O | O | O |
| | FROM 25 DEG C, 95% TO 25 DEG C, 45% | O | O | O | O | O | O | O | O | O | O |
| | FROM 25 DEG C, 45% TO 70 DEG C, 5.3% | O | O | O | O | O | O | O | O | O | O |
| | LIFE TEST | O | O | O | O | O | O | O | O | O | O |
| | CREEPING PROPERTY OF LIGHT TRANSMISSION LAYER (25 DEG C) | O | O | O | O | O | O | O | O | O | × |
| | CREEPING PROPERTY OF LIGHT TRANSMISSION LAYER (55 DEG C) | O | O | O | O | O | O | O | O | O | × |
| | CREEPING PROPERTY OF LIGHT TRANSMISSION LAYER (-10 DEG C) | O | O | O | O | O | O | O | O | O | O |
| | WARP AFTER BEING LEFT IN LOW TEMPERATURE ENVIRONMENT | O | O | O | O | O | O | O | O | O | O |
| | SURFACE HARDNESS | O | O | O | O | O | O | O | O | × | × |
| | WORKABILITY | O | O | O | O | O | O | O | O | O | O |
| TOTAL EVALUATION | | O | O | O | O | O | O | O | O | × | × |

FIG. 7

EP 2 290 649 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004127345 A
- JP 2006164496 A
- JP 2006004457 A